# EUROPÄISCHE PATENTSCHRIFT

(11) **EP 4 154 499 B1**
(45) Veröffentlichungstag und Bekanntmachung des Hinweises auf die Patenterteilung: **09.10.2024**
(21) Anmeldenummer: 21726875.4
(22) Anmeldetag: 14.05.2021
(51) Int. Cl.: G08G 1/16, H04L 67/12

(54) **REDUZIERUNG EINES KOLLISIONSRISIKOS MIT EINEM VERDECKTEN KRAFTFAHRZEUG**
REDUCTION OF THE RISK OF COLLISION WITH AN OBSCURED MOTOR VEHICLE
RÉDUCTION DU RISQUE DE COLLISION AVEC UN VÉHICULE À MOTEUR CACHÉ

(30) Priorität: 18.05.2020 DE 102020206246
(43) Veröffentlichungstag der Anmeldung: 29.03.2023
(73) Patentinhaber: VOLKSWAGEN AKTIENGESELLSCHAFT, 38440 Wolfsburg (DE); KTM AG, 5230 Mattighofen (AT)
(72) Erfinder: HARTOG, Johannes, 38106 Braunschweig (DE); HERMANN, Daniel, 38524 Sassenburg/Stüde (DE); SCHWARZ, Markus, 83533 Edling (DE); KRUMPHOLZ, Klaus, 83024 Rosenheim (DE); BIEHLE, Thomas, 29393 Groß Oesingen (DE)
(74) Vertreter: Hofstetter, Schurack & Partner
(86) Internationale Anmeldenummer: PCT/EP2021/062815
(87) Internationale Veröffentlichungsnummer: WO 2021/233777

(56) Entgegenhaltungen:
- EP-A1- 3 404 638
- US-B2- 10 446 033
- US-B2- 10 453 344

## Beschreibung

Die vorliegende Erfindung betrifft ein Verfahren zur Reduzierung eines Kollisionsrisikos zwischen einem ersten Kraftfahrzeug, bei dem es sich insbesondere um ein Kraftrad handelt, und einem zweiten Kraftfahrzeug, wobei das erste Kraftfahrzeug und das zweite Kraftfahrzeug auf jeweils unterschiedlichen Straßen in Richtung einer gemeinsamen Kreuzung oder Einmündung der Straßen fahren und wenigstens eine erste Fahrzeug-zu-Umwelt-Nachricht von dem ersten Kraftfahrzeug ausgesendet wird und von dem zweiten Kraftfahrzeug empfangen wird. Die Erfindung betrifft außerdem ein entsprechendes System zur Reduzierung eines Kollisionsrisikos.

Wenn ein Kraftfahrzeug durch ein weiteres, beispielsweise vorausfahrendes und gegebenenfalls größeres, Kraftfahrzeug verdeckt wird, kann dies an Kreuzungen oder Einmündungen zu schweren Unfällen führen. Dies ist insbesondere im Falle von Krafträdern relevant, da diese aufgrund ihrer vergleichsweise geringen Größe leicht durch andere Kraftfahrzeuge verdeckt werden können. Unfallstatistiken zeigen beispielsweise, dass eine überwiegende Mehrheit aller Unfälle mit Motorradbeteiligung in Deutschland im Bereich von Kreuzungen stattfindet und diese Unfälle zum größten Teil nicht durch die Motorradfahrer verursacht werden. Häufig sind dabei der Fahrer ebenso wie Kamera- oder Radarsysteme des beteiligten Kraftfahrzeugs nicht in der Lage, verdeckte Motorräder rechtzeitig zu erkennen. Analog stellt sich diese Problematik auch für den Fahrer des Motorrads.

Im Dokument US 2011/0095907 A1 wird eine Vorrichtung zur Unterstützung eines Kraftfahrzeugs beim Rechtsabbiegen beschrieben. Dabei wird mittels einer Verarbeitungseinheit eines Fahrzeugs, das im Begriff ist, rechts abzubiegen, abhängig von der Schwierigkeit, ein nachfolgendes Fahrzeug aufgrund eines toten Winkels eines vorausfahrenden Fahrzeugs zu erkennen, ein Rang für den toten Winkel bestimmt. Abhängig davon wird der Fahrer des rechts abbiegenden Kraftfahrzeugs entsprechend informiert.

Dokument US 10,446,033 B2 beschreibt ein System zum Betrieb eines Fahrzeugs. Ein Computer des Fahrzeugs kann von einem weiteren Fahrzeug eine V2V-Nachricht erhalten, wobei sich die Fahrzeuge auf sich kreuzenden Fahrspuren befinden. Ist das weitere Fahrzeug durch ein Objekt verdeckt, beispielsweise durch ein Gebäude, so erkennt der Computer die Präsenz des weiteren Fahrzeugs aufgrund der V2V-Nachricht, wohingegen dies durch Sensoren des Fahrzeugs nicht erkennbar ist. Der Computer kann basierend auf den Daten aus der Kommunikation mit dem weiteren Fahrzeug ein Bedrohungslevel bestimmen und eine Kollisionswarnung erzeugen, wenn das Bedrohungslevel über einem Schwellwert liegt.

Vor diesem Hintergrund ist es eine Aufgabe der vorliegenden Erfindung, ein verbessertes Konzept zur Reduzierung eines Kollisionsrisikos zwischen Kraftfahrzeugen anzugeben, das auch in dem Fall, in dem eines der Kraftfahrzeuge für das andere Kraftfahrzeug verdeckt ist, ein Risiko für oder durch die Kollision reduzieren kann.

Diese Aufgabe wird vorliegend gelöst durch den jeweiligen Gegenstand der unabhängigen Ansprüche. Vorteilhafte Weiterbildungen und bevorzugte Ausführungsformen sind Gegenstand der abhängigen Ansprüche.

Das verbesserte Konzept beruht auf der Idee, eine Fahrzeug-zu-Umwelt-Nachricht durch das gegebenenfalls verdeckte Kraftfahrzeug selbst auszusenden und durch das weitere Kraftfahrzeug basierend auf der Fahrzeug-zu-Umwelt-Nachricht eine Analyse durchzuführen, um die Verdeckung festzustellen und gegebenenfalls die Kritikalität der Situation zu bewerten.

Gemäß dem verbesserten Konzept wird ein Verfahren zur Reduzierung eines Kollisionsrisikos zwischen einem ersten Kraftfahrzeug, bei dem es sich insbesondere um ein Kraftrad, beispielsweise ein Motorrad, handelt, und einem zweiten Kraftfahrzeug angegeben. Das erste Kraftfahrzeug und das zweite Kraftfahrzeug fahren dabei auf jeweils unterschiedlichen Straßen in Richtung einer gemeinsamen Kreuzung oder Einmündung der Straßen. Von dem ersten Kraftfahrzeug wird wenigstens eine erste Fahrzeug-zu-Umwelt-Nachricht ausgesendet, insbesondere mittels einer ersten Kommunikationsschnittstelle des ersten Kraftfahrzeugs erzeugt und ausgesendet, und die wenigstens eine erste Fahrzeug-zu-Umwelt-Nachricht wird von dem zweiten Kraftfahrzeug empfangen, insbesondere mittels einer zweiten Kommunikationsschnittstelle des zweiten Kraftfahrzeugs. Mittels einer zweiten Recheneinheit des zweiten Kraftfahrzeugs wird abhängig von der wenigstens einen ersten Fahrzeug-zu-Umwelt-Nachricht festgestellt, ob eine Risikosituation gegeben ist, in der das erste Kraftfahrzeug für einen Fahrer des zweiten Kraftfahrzeugs und/oder für ein Umfeldsensorsystem des zweiten Kraftfahrzeugs durch ein dem ersten Kraftfahrzeug vorausfahrendes drittes Kraftfahrzeug verdeckt ist. Mittels der zweiten Recheneinheit wird eine Kritikalitätsanalyse durchgeführt, wenn festgestellt wurde, dass die Risikosituation gegeben ist und abhängig von einem Ergebnis der Kritikalitätsanalyse eine risikoreduzierende Maßnahme eingeleitet, um das Kollisionsrisiko zu reduzieren.

Dass ein Kraftfahrzeug auf einer Straße fährt kann hier und um folgenden auch Situationen beinhalten, in denen das Kraftfahrzeug verkehrs- oder situationsbedingt vorübergehend steht, beispielsweise an einer Ampel, an der Kreuzung oder Einmündung oder aufgrund zähflüssigen Verkehrs.

Unter dem Kollisionsrisiko kann insbesondere eine Wahrscheinlichkeit oder ein Risiko dafür verstanden werden, dass es zwischen dem ersten und dem zweiten Kraftfahrzeug zu einer Kollision kommt und/oder ein Risiko, dass es durch eine tatsächliche Kollision zu schweren Schäden oder Verletzungen der beteiligten Personen und/oder Kraftfahrzeuge kommt.

Als risikoreduzierende Maßnahme kommt daher jede Maßnahme infrage, die das Risiko für das tatsächliche Eintreten der Kollision reduziert und/oder die voraussichtliche Schwere der tatsächlichen Kollision und damit ein Verletzungsrisiko oder eine Schwere der Verletzung für beteiligte Personen reduziert.

Das erste Kraftfahrzeug kann beispielsweise eine erste Recheneinheit aufweisen. Die erste Recheneinheit kann beispielsweise mit der ersten Kommunikationsschnittstelle gekoppelt sein, insbesondere um diese zum Erzeugen und Aussenden der wenigstens einen ersten Fahrzeug-zu-Umwelt-Nachricht anzusteuern.

Unter einer Fahrzeug-zu-Umwelt-Nachricht kann beispielsweise eine drahtlos mittels eines Kraftfahrzeugs, insbesondere einer Kommunikationsschnittstelle, ausgesendete Nachricht zum Austausch von Informationen und/oder Daten zwischen dem aussendenden Kraftfahrzeug und einem weiteren Kraftfahrzeug oder zwischen dem Kraftfahrzeug und einer Infrastruktureinrichtung in einer Umgebung des Kraftfahrzeugs verstanden werden. Die entsprechende Kommunikation wird im Falle einer Kommunikation zwischen zwei Kraftfahrzeugen auch als Car-to-Car-Kommunikation, C2C-Kommunikation, Vehicle-to-Vehicle-Kommunikation oder V2V-Kommunikation, bezeichnet. Im allgemeinen Fall einer Kommunikation zwischen einem Kraftfahrzeug und einer nicht näher definierten empfangenden Einheit in der Umgebung des Kraftfahrzeugs, bei der es sich um eine Infrastruktureinrichtung oder ein Kraftfahrzeug handeln kann, wird von C2X oder V2X gesprochen. Im Folgenden wird daher die Bezeichnung C2X austauschbar mit "Fahrzeug-zu-Umwelt" verwendet.

Die C2X-Kommunikation beziehungsweise die C2X-Nachrichten können insbesondere standardisiert sein. Insbesondere können die hier und im Folgenden beschriebenen C2X-Nachrichten Nachrichten gemäß einem von dem Europäischen Telekommunikationsstandardinstitut, ETSI (European Telecommunication Standards Institute), beinhalten, beispielsweise eine oder mehrere CAM Nachrichten (englisch: "Cooperative Awareness Massage") oder eine oder mehrere CPM Nachrichten (englisch: "Collective Perception Massage"). Eine CAM Nachricht kann auch als Fahrzeug-zu-Umwelt-Statusnachricht bezeichnet werden, eine CPM Nachricht auch als Fahrzeug-zu-Umwelt-Sensornachricht.

Dass das erste und das zweite Kraftfahrzeug entlang der unterschiedlichen Straßen in Richtung der gemeinsamen Kreuzung oder Einmündung der Straßen fahren, kann insbesondere derart verstanden werden, dass eine wahrscheinliche Trajektorie des ersten Kraftfahrzeugs eine wahrscheinliche Trajektorie des zweiten Kraftfahrzeugs kreuzt. Beispielsweise kann das erste Kraftfahrzeug im Begriff sein, die Einmündung oder Kreuzung gerade zu überqueren, während das zweite Kraftfahrzeug im Begriff sein kann, an der Kreuzung oder Einmündung abzubiegen. Beispielsweise kann in einer solchen Situation das erste Kraftfahrzeug Vorfahrt gegenüber dem zweiten Kraftfahrzeug haben. Dies macht die Situation besonders kritisch, da ein Fahrer des ersten Kraftfahrzeugs sich gegebenenfalls auf die Vorfahrtsregel verlässt und dementsprechend das gegebenenfalls plötzlich auftauchende zweite Kraftfahrzeug besonders überraschend für den Fahrer ersten Kraftfahrzeugs ist.

Dass das erste Kraftfahrzeug für den Fahrer des zweiten Kraftfahrzeugs durch das dritte Kraftfahrzeug verdeckt ist, kann insbesondere derart verstanden werden, dass sich das erste Kraftfahrzeug vollständig oder zu einem vorgegebenen Mindestanteil in einem Raumbereich befindet, den der Fahrer aufgrund einer geometrischen Verdeckung durch das dritte Kraftfahrzeug prinzipiell nicht sehen kann. Analog kann auch verstanden werden, dass das erste Kraftfahrzeug für das Umfeldsensorsystem des zweiten Kraftfahrzeugs durch das dritte Kraftfahrzeug verdeckt ist.

In verschiedenen Ausgestaltungsformen des verbesserten Konzepts können jedoch auch Situationen berücksichtigt werden, in denen das erste Kraftfahrzeug für den Fahrer des zweiten Kraftfahrzeugs zwar prinzipiell zu erkennen wäre, also aus geometrischen Gesichtspunkten nicht verdeckt wäre, aufgrund einer Unaufmerksamkeit oder sonstiger kognitiver Phänomene des Fahrers des zweiten Kraftfahrzeugs das Vorhandensein des ersten Kraftfahrzeugs nicht bewusst realisiert wird und entsprechend nicht darauf reagiert wird.

Es ist bekannt, dass insbesondere Krafträder von Autofahrern häufig übersehen werden, obwohl diese aus geometrischen oder generell visuellen Gesichtspunkten heraus gut erkennbar wären. Dies geht jedenfalls zum Teil wohl darauf zurück, dass im regulären Straßenverkehr ein Fahrer eines Kraftwagens in der weitaus überwiegenden Zahl der Fälle mit weiteren Kraftwägen, jedoch nicht mit Krafträdern, konfrontiert ist. Entsprechende Ausführungsformen werden weiter unten im Detail erläutert.

Indem die risikoreduzierende Maßnahme abhängig von dem Ergebnis der Kritikalitätsanalyse durchgeführt wird, die wiederum nur dann durchgeführt wird, wenn die Risikosituation gemäß der wenigstens einen Fahrzeug-zu-Umwelt-Nachricht gegeben ist, stellt das Vorliegen der Risikosituation insbesondere eine notwendige Bedingung für das Einleiten der risikoreduzierenden Maßnahme dar. In verschiedenen Ausgestaltungsformen des Verfahrens kann das Vorliegen der Risikosituation auch eine hinreichende Bedingung sein. In solchen Ausgestaltungsformen dient die Kritikalitätsanalyse beispielsweise lediglich der Verifizierung des Vorliegens der Risikosituation beispielsweise anhand weiterer Informationen, etwa anhand von Sensordaten eines Umfeldsensorsystems des zweiten Kraftfahrzeugs. Bevorzugt ist das Vorliegen der Risikosituation jedoch zwar eine notwendige, aber nicht hinreichende Bedingung für das Einleiten der risikoreduzierenden Maßnahme.

Bei dem zweiten Kraftfahrzeug kann es sich insbesondere um einen Kraftwagen, einen Personenkraftwagen, einen Lastkraftwagen, ein Nutzfahrzeug oder ebenfalls um ein Kraftrad oder Motorrad handeln. Bei dem dritten Kraftfahrzeug kann es sich um einen Kraftwagen, einen Personenkraftwagen, einen Lastkraftwagen oder ein Nutzfahrzeug handeln.

Ein Umfeldsensorsystem kann hier und im Folgenden als Sensorsystem verstanden werden, das dazu in der Lage ist, Sensordaten oder Sensorsignale zu erzeugen, welche eine Umgebung des Umfeldsensorsystems abbilden, darstellen oder wiedergeben. Insbesondere ist die Fähigkeit, elektromagnetische oder sonstige Signale aus der Umwelt zu erfassen, nicht hinreichend, um ein Sensorsystem als Umfeldsensorsystem zu erachten. Beispielsweise können Kamerasysteme, Lidarsysteme, Radarsysteme oder Ultraschallsensorsysteme als Umfeldsensorsysteme bezeichnet werden.

Insbesondere kann das Umfeldsensorsystem des zweiten Kraftfahrzeugs, welches im Folgenden auch als zweites Umfeldsensorsystem bezeichnet wird, ein Kamerasystem, ein Radarsystem, ein Lidarsystem und/oder ein Ultraschallsensorsystem beinhalten.

Dadurch, dass das erste Kraftfahrzeug durch das dritte Kraftfahrzeug verdeckt ist, kann es, wie oben ausgeführt, per Definition durch den Fahrer des zweiten Kraftfahrzeugs und/oder das zweite Umfeldsensorsystem nicht erkannt werden. Entsprechend können der Fahrer und/oder das zweite Umfeldsensorsystem jedoch auch die Tatsache, dass das erste Kraftfahrzeug durch das dritte Kraftfahrzeug verdeckt ist, nicht oder nicht zuverlässig feststellen. Durch das verbesserte Konzept wird daher zum einen die Möglichkeit gegeben, die Verdeckung des ersten Kraftfahrzeugs zu erkennen, indem die wenigstens eine erste Fahrzeug-zu-Umwelt-Nachricht von dem ersten Kraftfahrzeug selbst ausgesendet wird und von dem zweiten Kraftfahrzeug ausgewertet wird. Liegt eine kritische Situation gemäß der Kritikalitätsanalyse vor, so kann bei verdecktem erstem Kraftfahrzeug eine entsprechende risikoreduzierende Maßnahme eingeleitet werden. Dadurch können Unfälle zwischen Kraftfahrzeugen, wobei eines der Kraftfahrzeuge durch ein weiteres Kraftfahrzeug verdeckt ist, verhindert werden oder es kann eine Schwere eines solchen Unfalls reduziert werden.

Mittels eines ersten Umfeldsensorsystems des ersten Kraftfahrzeugs werden erste Sensordaten erzeugt, die eine in Fahrtrichtung des ersten Kraftfahrzeugs vor dem ersten Kraftfahrzeug liegende Umgebung des ersten Kraftfahrzeugs repräsentieren. Die wenigstens eine erste Fahrzeug-zu-Umwelt-Nachricht wird, insbesondere mittels der ersten Kommunikationsschnittstelle und/oder mittels der ersten Recheneinheit, abhängig von den ersten Sensordaten erzeugt und ausgesendet. Die wenigstens eine erste Fahrzeug-zu-Umwelt-Nachricht enthält eine erste Fahrzeug-zu-Umwelt-Sensornachricht betreffend die ersten Sensordaten.

In einer ersten Alternative wird mittels der ersten Recheneinheit des ersten Kraftfahrzeugs wird basierend auf den ersten Sensordaten überprüft, ob sich ein weiteres Kraftfahrzeug, insbesondere das dritte Kraftfahrzeug oder ein viertes Kraftfahrzeug, innerhalb eines vorgegebenen Bereichs vor und/oder neben dem ersten Kraftfahrzeug befindet. Die erste Fahrzeug-zu-Umwelt-Sensornachricht wird nur dann ausgesendet, wenn anhand der Überprüfung festgestellt wird, dass sich das weitere Kraftfahrzeug innerhalb des vorgegebenen Bereichs befindet.

Auf diese Weise wird also insbesondere festgestellt, ob sich das weitere Kraftfahrzeug auf einer benachbarten Spur zu dem ersten Kraftfahrzeug befindet und/oder ob es dem Kraftfahrzeug vorausfährt. Dadurch kann die zweite Recheneinheit basierend auf der ersten Fahrzeug-zu-Umwelt-Sensornachricht die potentielle Verdeckung des ersten Kraftfahrzeugs durch das weitere Kraftfahrzeug, insbesondere durch das dritte Kraftfahrzeug, erkennen.

In einer zweiten Alternative bestimmt die zweite Recheneinheit basierend auf der wenigstens einen ersten Fahrzeug-zu-Umwelt-Nachricht und optional basierend auf den ersten und/oder zweiten Sensordaten eine Wahrscheinlichkeit dafür, dass das erste Kraftfahrzeug durch das dritte Kraftfahrzeug verdeckt ist und führt die Kritikalitätsanalyse basierend auf der Wahrscheinlichkeit für die Verdeckung durch.

Gemäß dem verbesserten Konzept wird also insbesondere ausgenutzt, dass das erste Kraftfahrzeug erkennen kann, dass es durch das dritte Kraftfahrzeug verdeckt ist oder zumindest Informationen bereitstellen kann, die es dem zweiten Kraftfahrzeug erlauben, dies festzustellen.

Gemäß zumindest einer Ausführungsform des Verfahrens nach dem verbesserten Konzept wird die Kritikalitätsanalyse mittels der zweiten Recheneinheit abhängig von der wenigstens einen ersten Fahrzeug-zu-Umwelt-Nachricht durchgeführt.

Beispielsweise kann die wenigstens eine erste Fahrzeug-zu-Umwelt-Nachricht Informationen betreffend einen Zustand oder Bewegungszustand des ersten Kraftfahrzeugs, insbesondere betreffend eine Geschwindigkeit, eine Beschleunigung, ein voraussichtliches Fahrmanöver, eine Fahrspur, auf der sich das erste Kraftfahrzeug befindet, und so weiter beinhalten. Für die Kritikalitätsanalyse können diese Informationen berücksichtigt werden.

Gemäß zumindest einer Ausführungsform wird die Kritikalitätsanalyse basierend auf Bewegungszustandsdaten des zweiten Kraftfahrzeugs durchgeführt, die beispielsweise mittels eines Bewegungssensorsystems des zweiten Kraftfahrzeugs bestimmt werden. Die Bewegungszustandsdaten des zweiten Kraftfahrzeugs können eine Geschwindigkeit, Beschleunigung und dergleichen des zweiten Kraftfahrzeugs beinhalten.

Gemäß zumindest einer Ausführungsform werden mittels des zweiten Umfeldsensorsystems des zweiten Kraftfahrzeugs werden zweite Sensordaten erzeugt.

Gemäß zumindest einer Ausführungsform wird die Kritikalitätsanalyse abhängig von den ersten Sensordaten und/den zweiten Sensordaten durchgeführt.

Beispielsweise kann die zweite Recheneinheit basierend auf den zur Verfügung stehenden Informationen, insbesondere den ersten und/oder zweiten Sensordaten und/oder den Bewegungszustandsdaten des ersten und/oder zweiten Kraftfahrzeugs, abschätzen, ob sich die Trajektorien des ersten und zweiten Kraftfahrzeugs tatsächlich oder voraussichtlich tatsächlich schneiden. Es kann also insbesondere bestimmt werden, ob es einen Zeitraum gibt, während dem ein Abstand des ersten und des zweiten Kraftfahrzeugs voneinander kleiner ist als ein vorgegebener kritischer Abstand, der dann potentiell mit einer Kollision einhergehen könnte. In diesem Fall kann von sich schneidenden Trajektorien gesprochen werden.

Anhand der genannten zur Verfügung stehenden Daten und Informationen kann die zweite Recheneinheit auch bestimmen, ob für das zweite Kraftfahrzeug ein Ausweichen oder Bremsen möglich ist, um die Kollision zu verhindern. Die Kritikalitätsanalyse kann auch basierend auf dieser Information oder dem Ergebnis dieser Überprüfung durchgeführt werden.

Gemäß zumindest einer Ausführungsform beinhaltet die wenigstens eine erste Fahrzeug-zu-Umwelt-Nachricht eine oder mehrere C2X-Nachrichten, insbesondere eine oder mehrere C2C-Nachrichten.

Das erste Umfeldsensorsystem kann insbesondere ein Kamerasystem, ein Radarsystem, ein Lidarsystem und/oder ein Ultraschallsensorsystem beinhalten.

Durch die Erzeugung der ersten Sensordaten kann durch das erste Kraftfahrzeug und insbesondere durch das zweite Kraftfahrzeug anhand der wenigstens einen ersten Fahrzeug-zu-Umwelt-Nachricht erkannt werden, ob das dritte Kraftfahrzeug dem ersten Kraftfahrzeug vorausfährt. Entsprechend kann die Wahrscheinlichkeit der Verdeckung des ersten Kraftfahrzeugs durch das dritte Kraftfahrzeug basierend auf den ersten Sensordaten bestimmt werden oder das Vorliegen der Risikosituation kann entsprechend bestimmt werden.

Gemäß zumindest einer Ausführungsform wird die erste Fahrzeug-zu-Umwelt-Nachricht zyklisch ausgesendet.

Das zyklische Aussenden der ersten Fahrzeug-zu-Umwelt-Sensornachricht kann dabei insbesondere einem Aussenden mit einer vorgegebenen Frequenz, die beispielsweise in einer Größenordnung von eins bis zehn Hertz liegt, wobei bei jedem erneuten Aussenden die erste Fahrzeug-zu-Umwelt-Sensornachricht entsprechend aktualisiert wird. Ob die Fahrzeug-zu-Umwelt-Sensornachricht tatsächlich zyklisch ausgesendet wird oder während welchen Zeitraums diese ausgesendet wird, kann Gegenstand weiterer Bedingungen sein.

Gemäß zumindest einer Ausführungsform wird mittels des zweiten Kraftfahrzeugs wenigstens eine zweite Fahrzeug-zu-Umwelt-Nachricht erzeugt und ausgesendet und mittels des ersten Kraftfahrzeugs empfangen.

Die wenigstens eine zweite Fahrzeug-zu-Umwelt-Nachricht kann insbesondere eine zweite Fahrzeug-zu-Umwelt-Statusnachricht betreffend einen aktuellen Zustand des zweiten Kraftfahrzeugs enthalten.

Gemäß zumindest einer Ausführungsform wird die erste Fahrzeug-zu-Umwelt-Sensornachricht nur dann ausgesendet, wenn mittels der ersten Recheneinheit festgestellt wird, dass die wenigstens eine zweite Fahrzeug-zu-Umwelt-Nachricht von dem ersten Kraftfahrzeug empfangen wird.

Dadurch, dass das Aussenden der ersten Fahrzeug-zu-Umwelt-Sensornachricht an weitere Bedingungen wie etwa das Vorhandensein des weiteren Kraftfahrzeugs in dem vorgegebenen Bereich oder das Empfangen der wenigstens einen zweiten Fahrzeug-zu-Umwelt-Nachricht geknüpft wird, kann mit Vorteil der gesamte Datenverkehr reduziert werden.

Gemäß zumindest einer Ausführungsform wird mit der ersten Recheneinheit weiter überprüft, ob sich die Kreuzung oder Einmündung innerhalb einer vorgegebenen Entfernung von dem ersten Kraftfahrzeug befindet. Die erste Fahrzeug-zu-Umwelt-Sensornachricht wird nur dann ausgesendet, wenn anhand der weiteren Überprüfung festgestellt wird, dass sich die Kreuzung oder Einmündung innerhalb der vorgegebenen Entfernung befindet.

Auch dadurch kann der gesamte Datenverkehr reduziert werden. Nur wenn sich die Kreuzung beziehungsweise die Einmündung innerhalb einer gewissen minimalen Entfernung zu dem ersten Kraftfahrzeug befindet, ist ein Aussenden und gegebenenfalls Empfangen der Fahrzeug-zu-Umwelt-Sensornachricht erforderlich oder sinnvoll.

Gemäß zumindest einer Ausführungsform ruft die erste Recheneinheit digitale Kartendaten von einer Datenbank ab, um festzustellen beziehungsweise zu überprüfen, ob sich die Kreuzung oder Einmündung innerhalb der vorgegebenen Entfernung befindet. Bei der Datenbank kann es sich um eine Online- oder eine Offlinedatenbank handeln, also insbesondere eine Datenbank, die auf einem Speicherelement eines zentralen Rechnersystems extern zu dem ersten Kraftfahrzeug befindet oder auf einem Speicherelement des ersten Kraftfahrzeugs, insbesondere der ersten Recheneinheit, gespeichert sein.

Gemäß zumindest einer Ausführungsform wird mittels der ersten Recheneinheit basierend auf den ersten Sensordaten bestimmt, ob ein vorausfahrendes Kraftfahrzeug, insbesondere dem ersten Kraftfahrzeug vorausfahrendes Kraftfahrzeug, beispielsweise das dritte Kraftfahrzeug, im Begriff ist, an der Kreuzung oder der Einmündung abzubiegen, beispielsweise anhand einer Statusanzeige des vorausfahrenden Kraftfahrzeugs oder einer Blinkeranzeige des vorausfahrenden Kraftfahrzeugs. Mittels der ersten Recheneinheit wird anhand dieser Informationen bestimmt, ob sich die Kreuzung oder Einmündung innerhalb der vorgegebenen Entfernung befindet.

Gemäß zumindest einer Ausführungsform empfängt das erste Kraftfahrzeug, insbesondere mittels der ersten Kommunikationsschnittstelle, eine oder mehrere C2X-Nachrichten von einer Infrastruktureinrichtung innerhalb einer Umgebung des ersten Kraftfahrzeugs. Die erste Recheneinheit überprüft basierend auf der C2X-Nachricht der Infrastruktureinrichtung, ob sich die Kreuzung oder Einmündung innerhalb der vorgegebenen Entfernung befindet.

Gemäß zumindest einer Ausführungsform empfängt das erste Kraftfahrzeug, insbesondere mittels der ersten Kommunikationsschnittstelle, eine oder mehrere C2X-Nachrichten von den vorausfahrenden oder weiteren vorausfahrenden Kraftfahrzeugen, die insbesondere eine Fahrthistorie des vorausfahrenden oder weiteren vorausfahrenden Kraftfahrzeugs beinhaltet. Die Fahrthistorie kann Wegpunkte über eine vorgegebene Entfernung beinhalten, die beispielsweise in der Größenordnung von 100 m bis 500 m liegen kann. Die erste Recheneinheit überprüft anhand der C2X-Nachricht des vorausfahrenden oder weiter vorausfahrenden Kraftfahrzeugs, insbesondere basierend auf der Fahrthistorie, ob sich die Kreuzung oder Einmündung in dem vorgegebenen Bereich befindet.

Gemäß zumindest einer Ausführungsform wird wenigstens eine zweite C2X-Nachricht von dem zweiten Kraftfahrzeug ausgesendet und von dem ersten Kraftfahrzeug empfangen. Mittels der ersten Recheneinheit wird eine weitere Kritikalitätsanalyse durchgeführt, wenn anhand der weiteren Überprüfung festgestellt wird, dass sich das weitere Kraftfahrzeug innerhalb des vorgegebenen Bereichs befindet. Mittels der ersten Recheneinheit wird abhängig von einem Ergebnis der weiteren Kritikalitätsanalyse eine weitere risikoreduzierende Maßnahme eingeleitet. Solche Ausführungsformen erfordern nicht notwendigerweise das Erzeugen der ersten Sensordaten mittels des ersten Umfeldsensorsystems.

Mit anderen Worten kann das Einleiten risikoreduzierender Maßnahmen auf Seiten des ersten sowie des zweiten Kraftfahrzeugs erfolgen.

Gemäß zumindest einer Ausführungsform enthält die wenigstens eine zweite C2X-Nachricht eine CAM-Nachricht.

Gemäß zumindest einer Ausführungsform enthält die wenigstens eine erste C2X-Nachricht eine erste C2X-Statusnachricht, insbesondere eine CAM-Nachricht, betreffend einen Zustand, insbesondere aktuellen Zustand, des ersten Kraftfahrzeugs und die erste C2X-Statusnachricht wird insbesondere zyklisch ausgesendet.

Der Zustand des ersten Kraftfahrzeugs kann einen Bewegungszustand, eine Position, einen Beleuchtungszustand oder eine Geschwindigkeit des ersten Kraftfahrzeugs beinhalten.

Gemäß zumindest einer Ausführungsform beinhaltet die risikoreduzierende Maßnahme das Ausgeben einer visuellen, akustischen und/oder haptischen Warnung für den Fahrer des zweiten Kraftfahrzeugs.

Die Ausgestaltung der Warnung kann dabei insbesondere abhängig von der ermittelten Kritikalität, insbesondere der tatsächlichen Wahrscheinlichkeit für eine mögliche Kollision, erfolgen.

Gemäß zumindest einer Ausführungsform enthält die weitere risikoreduzierende Maßnahme das Ausgeben einer visuellen, akustischen und/oder haptischen Warnung für den Fahrer des ersten Kraftfahrzeugs.

Gemäß zumindest einer Ausführungsform enthält die risikoreduzierende Maßnahme einen automatischen Eingriff in eine Steuerung des zweiten Kraftfahrzeugs und/oder die weitere risikoreduzierende Maßnahme enthält einen automatischen Eingriff in eine Steuerung des ersten Kraftfahrzeugs.

Der Eingriff und die Steuerung können dabei insbesondere das Einleiten einer Bremsung oder das Verhindern eines Losfahrens oder Weiterfahrens des jeweiligen Kraftfahrzeugs beinhalten.

Gemäß zumindest einer Ausführungsform enthält die risikoreduzierende Maßnahme das Ausgaben einer visuellen und/oder akustischen Warnung in eine Umgebung des zweiten Kraftfahrzeugs und/oder die weitere risikoreduzierende Maßnahme enthält das Ausgeben einer visuellen und/oder akustischen Warnung in eine Umgebung des ersten Kraftfahrzeugs.

Gemäß zumindest einer Ausführungsform werden mittels eines Fahrerüberwachungssystems des zweiten Kraftfahrzeugs Fahrerüberwachungsdaten betreffend den Fahrer des zweiten Kraftfahrzeugs erzeugt. Mittels der zweiten Recheneinheit wird die Kritikalitätsanalyse abhängig von den Fahrerüberwachungsdaten durchgeführt, insbesondere wenn festgestellt wird, dass die Risikosituation gegeben ist.

Gemäß zumindest einer Ausführungsform werden mittels des Fahrerüberwachungssystems des zweiten Kraftfahrzeugs Fahrerüberwachungsdaten betreffend den Fahrer des zweiten Kraftfahrzeugs erzeugt und mittels der zweiten Recheneinheit wird eine zweite weitere Kritikalitätsanalyse abhängig von den Fahrerüberwachungsdaten durchgeführt und abhängig von einem Ergebnis der zweiten weiteren Kritikalitätsanalyse eine zweite weitere risikoreduzierende Maßnahme eingeleitet.

Das Fahrerüberwachungssystem kann beispielsweise eine oder mehrere Kameras oder Blickverfolgungsvorrichtungen (englisch: "Eyetracker") beinhalten, um eine Position eines Körperteils, beispielsweise des Kopfes, des Fahrers des zweiten Kraftfahrzeugs und/oder eine Blickrichtung der Augen des Fahrers des zweiten Kraftfahrzeugs zu überwachen. Die Fahrerüberwachungsdaten können daher Auskunft über eine kognitive Auslastung oder eine kognitive Ablenkung des Fahrers gegeben. Dementsprechend kann die zweite Recheneinheit basierend auf den Fahrerüberwachungsdaten beispielsweise erkennen, ob der Fahrer das erste Kraftfahrzeug bewusst wahrnimmt und/oder angemessen auf das erste Kraftfahrzeug reagiert.

Dies kann insbesondere unabhängig davon erfolgen, ob die Risikosituation gegeben ist. Insbesondere kann dies auch durchgeführt werden, wenn das erste Kraftfahrzeug nicht durch das dritte Kraftfahrzeug verdeckt ist. Dadurch können auch in Situationen, in denen das erste Kraftfahrzeug aus anderen Gründen als der geometrischen Verdeckung von dem Fahrer des zweiten Kraftfahrzeugs kognitiv nicht ausreichend wahrgenommen wird, das Risiko einer Kollision verhindert werden.

Gemäß zumindest einer Ausführungsform wird mittels der zweiten Recheneinheit abhängig von den Fahrerüberwachungsdaten und abhängig von der wenigstens einen ersten Fahrzeug-zu-Umwelt-Nachricht festgestellt, ob eine weitere Risikosituation gegeben ist, in der eine reduzierte Aufmerksamkeit des Fahrers betreffend das erste Kraftfahrzeug vorliegt. Mittels der zweiten Recheneinheit wird die Kritikalitätsanalyse nur dann abhängig von den Fahrerüberwachungsdaten durchgeführt, wenn festgestellt wurde, dass die weitere Risikosituation gegeben ist.

Wenn die weitere Risikosituation dagegen nicht gegeben ist, die Risikosituation, in der das erste Kraftfahrzeug von dem dritten Kraftfahrzeug verdeckt ist, jedoch gegeben ist, so wird die Kritikalitätsanalyse mittels der zweiten Recheneinheit unabhängig von den Fahrerüberwachungsdaten durchgeführt.

Gemäß zumindest einer Ausführungsform wird mittels der zweiten Recheneinheit abhängig von den Fahrerüberwachungsdaten und von der wenigstens einen ersten Fahrzeug-zu-Umwelt-Nachricht festgestellt, ob die weitere Risikosituation gegeben ist und mittels der zweiten Recheneinheit wird die zweite weitere Kritikalitätsanalyse nur dann durchgeführt, wenn festgestellt wurde, dass die weitere Risikosituation gegeben ist.

Insbesondere wird die zweite weitere Kritikalitätsanalyse nicht ausgeführt, wenn die weitere Risikosituation nicht gegeben ist.

Gemäß dem verbesserten Konzept wird auch ein System zur Reduzierung eines Kollisionsrisikos zwischen einem ersten Kraftfahrzeug, bei dem es sich insbesondere um ein Kraftrad handelt, und einem zweiten Kraftfahrzeug, wobei das erste und das zweite Kraftfahrzeug auf jeweils unterschiedlichen Straßen in Richtung einer gemeinsamen Kreuzung oder Einmündung der Straßen fahren, angegeben. Das System weist eine erste Kommunikationsschnittstelle für das erste Kraftfahrzeug auf, die dazu eingerichtet ist, wenigstens eine erste Fahrzeug-zu-Umwelt-Nachricht auszusenden. Das System weist eine zweite Kommunikationsschnittstelle für das zweite Kraftfahrzeug auf, die dazu eingerichtet ist, die wenigstens eine erste Fahrzeug-zu-Umwelt-Nachricht zu empfangen. Das System weist eine zweite Recheneinheit für das zweite Kraftfahrzeug auf, die dazu eingerichtet ist, abhängig von der wenigstens einen ersten Fahrzeug-zu-Umwelt-Nachricht festzustellen, ob eine Risikosituation gegeben ist, in der das erste Kraftfahrzeug für einen Fahrer des zweiten Kraftfahrzeugs und/oder für ein Umweltsensorsystem des zweiten Kraftfahrzeugs durch ein dem ersten Kraftfahrzeug vorausfahrendes drittes Kraftfahrzeug verdeckt ist. Die zweite Recheneinheit ist dazu eingerichtet, eine Kritikalitätsanalyse durchzuführen, wenn festgestellt wurde, dass die Risikosituation gegeben ist und abhängig von einem Ergebnis der Kritikalitätsanalyse eine risikoreduzierende Maßnahme einzuleiten.

Das System weist ein Umfeldsensorsystem für das erste Kraftfahrzeugs auf, das dazu eingerichtet ist, erste Sensordaten zu erzeugen, die eine in Fahrtrichtung vor dem ersten Kraftfahrzeug liegende Umgebung repräsentieren und die erste Kommunikationsschnittstelle ist dazu eingerichtet, die wenigstens eine erste Fahrzeug-zu-Umwelt-Nachricht abhängig von den ersten Sensordaten zu erzeugen und auszusenden, wobei die wenigstens eine erste Fahrzeug-zu-Umwelt-Nachricht eine erste Fahrzeug-zu-Umwelt-Sensornachricht betreffend die ersten Sensordaten enthält.

Das System weist eine erste Recheneinheit für das erste Kraftfahrzeug auf, die dazu eingerichtet ist, basierend auf den ersten Sensordaten zu überprüfen, ob sich ein weiteres Kraftfahrzeug innerhalb eines vorgegeben Bereichs vor und/oder neben dem ersten Kraftfahrzeug befindet und die erste Kommunikationsschnittstelle ist dazu eingerichtet, die erste Fahrzeug-zu-Umwelt-Sensornachricht nur dann auszusenden, wenn anhand der Überprüfung festgestellt wird, dass sich das weitere Kraftfahrzeug innerhalb des vorgegebenen Bereichs befindet, und/oder die zweite Recheneinheit ist dazu eingerichtet, basierend auf der wenigstens einen ersten Fahrzeug-zu-Umwelt-Nachricht und den ersten Sensordaten eine Wahrscheinlichkeit dafür zu bestimmen, dass das erste Kraftfahrzeug durch das dritte Kraftfahrzeug verdeckt ist und die Kritikalitätsanalyse basierend auf der Wahrscheinlichkeit für die Verdeckung durchzuführen.

Weitere Ausführungsformen des Systems nach dem verbesserten Konzept folgen direkt aus den verschiedenen Ausführungsformen des Verfahrens zur Reduzierung eines Kollisionsrisikos nach dem verbesserten Konzept und umgekehrt. Insbesondere kann ein System nach dem verbesserten Konzept dazu eingerichtet oder programmiert sein, ein Verfahren nach dem verbesserten Konzept durchzuführen oder das System führt ein solches Verfahren durch.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen können nicht nur in der jeweils angegebenen Kombination, sondern auch in anderen Kombinationen von dem verbesserten Konzept umfasst sein. Es sind somit auch solche Ausführungen des verbesserten Konzepts umfasst und offenbart, die in den Figuren nicht explizit gezeigt und/oder erläutert sind, jedoch durch separierte Merkmalskombinationen aus den erläuterten Ausführungen hervorgehen und erzeugbar sind. Es sind somit insbesondere auch Ausführungen und Merkmalskombinationen umfasst und offenbart, die nicht alle Merkmale eines ursprünglich formulierten Anspruchs aufweisen. Es sind darüber hinaus Ausführungen und Merkmalskombinationen umfasst und offenbart, die über die in den Rückbezügen der Ansprüche dargelegten Merkmalskombinationen hinausgehen oder von denen abweichen.

Die Erfindung umfasst auch die Kombinationen der Merkmale der beschriebenen Ausführungsformen.

Im Folgenden ist ein Ausführungsbeispiel der Erfindung beschrieben. Hierzu zeigt:
Fig. schematisch eine beispielhafte Ausführungsform eines Systems zur Reduzierung eines Kollisionsrisikos nach dem verbesserten Konzept.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

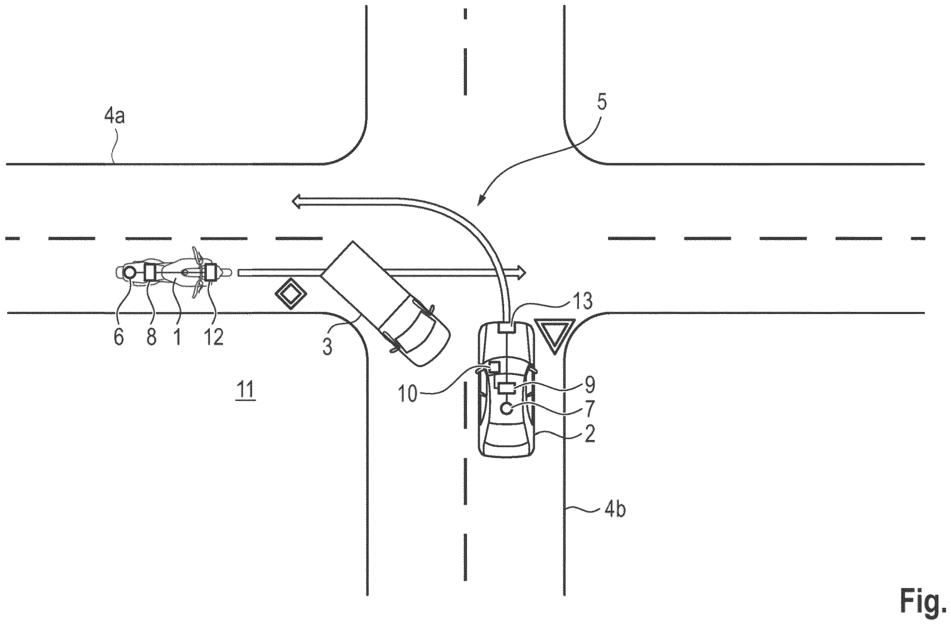

In der Figur ist schematisch eine beispielhafte Ausführungsform eines Systems zur Reduzierung eines Kollisionsrisikos nach dem verbesserten Konzept dargestellt.

In der Figur ist eine Situation dargestellt, in der ein erstes Kraftfahrzeug, insbesondere ein Motorrad 1, auf einer ersten Straße 4a auf eine Kreuzung 5 mit einer zweiten Straße 4b zufährt und im Begriff ist, diese geradeaus zu überqueren. Ein zweites Kraftfahrzeug 2, insbesondere ein Pkw, nähert sich auf der zweiten Straße 4b der Kreuzung 5 und der Fahrer des zweiten Kraftfahrzeugs 2 beabsichtigt beispielsweise, an der Kreuzung 5 links in die Straße 4a einzubiegen. Dementsprechend kreuzen sich die potentiellen Trajektorien des Motorrads 1 und des zweiten Kraftfahrzeugs 2 im Bereich der Kreuzung 5. In der dargestellten beispielhaften Situation hat beispielsweise das Motorrad 1 Vorfahrt gegenüber dem zweiten Kraftfahrzeug 2.

Ein drittes Kraftfahrzeug 3, beispielsweise ein Lieferwagen oder Lkw, fährt dem Motorrad 1 auf derselben Fahrspur der ersten Straße 4a voraus und ist beispielsweise im Begriff, an der Kreuzung 5 rechts abzubiegen. Entsprechend kann das dritte Kraftfahrzeug 3 aus Sicht des zweiten Kraftfahrzeugs 2 beziehungsweise eines Fahrers des zweiten Kraftfahrzeugs 2 das Motorrad 1 verdecken. Dadurch entsteht ein erhöhtes Kollisionsrisiko, wenn der Fahrer des zweiten Kraftfahrzeugs 2 an der Kreuzung 5 abbiegt beziehungsweise in die Kreuzung 5 einfährt, ohne das Motorrad 1 wahrzunehmen.

In der Figur ist schematisch ein System 11 zur Reduzierung eines Kollisionsrisikos nach dem verbesserten Konzept in einer beispielhaften Ausführungsform dargestellt. Das System 11 weist eine erste Recheneinheit 8 des Motorrads 1 und eine erste Kommunikationsschnittstelle 6 des Motorrads 1 auf, die mit der ersten Recheneinheit 8 gekoppelt ist. Das System 11 weist außerdem eine zweite Recheneinheit 9 des zweiten Kraftfahrzeugs 2 und eine zweite Kommunikationsschnittstelle 7 des zweiten Kraftfahrzeugs 2 auf, welche mit der zweiten Recheneinheit 9 gekoppelt ist. Die Kommunikationsschnittstellen 6, 7 sind insbesondere als C2X-Schnittstellen ausgestaltet.

Das System 11 weist außerdem ein erstes Umfeldsensorsystem 12 des Motorrads 1 auf, das beispielsweise ein Radarsystem enthalten kann. Alternativ oder zusätzlich kann das erste Umfeldsensorsystem 12 auch eine oder mehrere Kameras, Lidarsysteme und/oder Ultraschallsensorsysteme beinhalten.

Das System 11 weist außerdem ein zweites Umfeldsensorsystem 13 für das zweite Kraftfahrzeug 2 auf. Das zweite Umfeldsensorsystem 13 kann beispielsweise eine oder mehrere Kameras, eines oder mehrere Radarsysteme, eines oder mehrere Lidarsysteme und/oder eines oder mehrere Ultraschallsensorsysteme beinhalten.

Durch das erste Umfeldsensorsystem 12 ist das Motorrad 1 in der Lage, das vorausfahrende dritte Kraftfahrzeug 3 zu detektieren und damit Hinweise auf eine mögliche Verdeckung des Motorrads 1 durch das dritte Kraftfahrzeug 3. Insbesondere kann das erste Umfeldsensorsystem 12 einen Bereich vor und/oder neben dem Motorrad 1 überwachen und basierend darauf erste Sensordaten erzeugen. Mittels der ersten Recheneinheit 8 wird dann beispielsweise die erste Kommunikationsschnittstelle 6 zum Erzeugen wenigstens einer C2X-Nachricht angesteuert.

In verschiedenen Ausführungsformen kann das Motorrad 1 beispielsweise zyklisch mit einer Frequenz von 1 bis 10 Hz Statusnachrichten, also CAM-Nachrichten aussenden. Zusätzlich kann das Motorrad 1 Sensorobjektnachrichten, also CPM-Nachrichten, aussenden, beispielsweise ebenfalls dauerhaft und zyklisch oder zyklisch, sobald das vorausfahrende dritte Kraftfahrzeug 3 mittels der ersten Recheneinheit 8 basierend auf den ersten Sensordaten erfasst wird. Alternativ kann die CPM-Nachricht auch nur dann zyklisch ausgesendet werden, wenn das vorausfahrende dritte Kraftfahrzeug 3 erfasst wird und mittels der ersten Recheneinheit 8 basierend auf den ersten Sensordaten oder zusätzlichen Informationen festgestellt wird, dass die Kreuzung 5 innerhalb eines vorgegebenen Bereichs oder innerhalb einer vorgegebenen Entfernung erfolgt.

Dazu kann die erste Recheneinheit 8 beispielsweise Online- oder Offline-Kartendaten, Statusanzeigen des vorausfahrenden dritten Kraftfahrzeugs 3, wie beispielsweise einen aktiven Blinker, oder C2X-Infrastrukturnachrichten von Infrastruktureinrichtungen, beispielsweise Ampeln oder dergleichen, heranziehen.

Zum Identifizieren, dass die Kreuzung 5 innerhalb der vorgegebenen Entfernung liegt, können auch andere Methoden verwendet werden. Beispielsweise kann das Motorrad 1 C2X-Nachrichten anderer Kraftfahrzeuge, beispielsweise des dritten Kraftfahrzeugs 3, empfangen und eine damit ausgesendete Fahrthistorie, also beispielsweise Wegpunkte der zuletzt innerhalb der letzten 100 bis 500 m zurückgelegten Strecke, erhalten. Basierend darauf kann die erste Recheneinheit 8 dann die entsprechende Überprüfung vornehmen.

Auch das zweite Kraftfahrzeug 2 kann C2X-Nachrichten beispielsweise CAM- oder CPM-Nachrichten, aussenden, die von dem Motorrad 1, insbesondere der ersten Kommunikationsschnittstelle 6, empfangen werden.

Das dritte Kraftfahrzeug 3 kann durch die erste Recheneinheit 8 basierend auf den ersten Sensordaten erfasst werden und/oder durch die zweite Recheneinheit 9 basierend auf der wenigstens einen C2X-Nachricht von dem Motorrad 1.

Basierend darauf kann die zweite Recheneinheit 9 und beispielsweise auch die erste Recheneinheit 8 eine Risikobeurteilung und/oder Kritikalitätseinschätzung durchführen, um abhängig von einem Ergebnis der Einschätzung den jeweiligen Fahrer entsprechend zu warnen oder einen Eingriff in die Steuerung des jeweiligen Kraftfahrzeugs automatisch vorzunehmen.

Durch das verbesserte Konzept können also sowohl der Fahrer des zweiten Kraftfahrzeugs 2 als auch der Motorradfahrer des Motorrads 1 im Bereich der Kreuzung 5 gewarnt werden, falls eine Kollision wahrscheinlich ist und beispielsweise die Sicht zwischen den Kraftfahrzeugen 1, 2 durch das dritte Kraftfahrzeug 3 verdeckt ist.

Dafür können für die Warnung des Fahrers des zweiten Kraftfahrzeugs beziehungsweise für die Warnung des Fahrers des Motorrads 1 Auslösebedingungen festgelegt sein.

Die Auslösebedingungen für den Fahrer des zweiten Kraftfahrzeugs 2 können beispielsweise beinhalten, dass sich das zweite Kraftfahrzeug 2 der Kreuzung 5 nähert, an einer Haltelinie der Kreuzung 5 bereits steht oder im Begriff ist, in den Kreuzungsbereich der Kreuzung 5 einzufahren. Die Auslösebedingungen können auch beinhalten, dass das zweite Kraftfahrzeug an der Kreuzung 5 keine Vorfahrt hat. Die Auslösebedingungen können auch beinhalten, dass sich ein Motorrad, beispielsweise von links, der Kreuzung 5 nähert. Die Auslösebedingungen können auch beinhalten, dass das Motorrad 1 zyklisch CAM-Nachrichten aussendet und/oder CPM-Nachrichten aussendet, wobei die CPM-Nachrichten Informationen betreffend das vorausfahrende dritte Kraftfahrzeug 3 beinhalten. Die Auslösebedingungen können auch beinhalten, dass die CPM-Nachrichten des Motorrads 1 Informationen dahingehend beinhalten, dass das dritte Kraftfahrzeug 3 im Begriff ist abzubiegen, insbesondere rechts abzubiegen, und eventuell deswegen seine Geschwindigkeit reduziert. Die Auslösebedingungen können auch beinhalten, dass die prädizierte Ankunft des Motorrads 1 im Bereich der Kreuzung 5, insbesondere im Bereich einer möglichen Überschneidung der Trajektorien, zeitlich mit der Ankunft oder geplanten Abfahrt des zweiten Kraftfahrzeugs 2 übereinstimmt oder innerhalb eines vorgegebenen Zeitintervalls liegt.

Die Auslösebedingungen für die Warnung des Fahrers des zweiten Kraftfahrzeugs können auch beinhalten, dass Auswertungen von Fahrerüberwachungsdaten durch die zweite Recheneinheit 9 darauf hindeuten, dass der Fahrer des zweiten Kraftfahrzeugs 2 das Motorrad 1 nicht bewusst wahrnimmt. Dazu kann das System 11 beispielsweise ein Fahrerüberwachungssystem 10 zur Überwachung einer Blickrichtung oder Kopfposition des Fahrers des zweiten Kraftfahrzeugs beinhalten. Dadurch kann eine Innenraumüberwachung oder Fahrerüberwachung des Fahrers des zweiten Kraftfahrzeugs durchgeführt werden. Die Fahrerüberwachungsdaten können entsprechend ausgewertet werden, um eine kognitive Ablenkung des Fahrers mit zu berücksichtigen.

Die genannten Auslösebedingungen können in verschiedenen Kombinationen vorgesehen sein. Treffen eine oder mehrere der Auslösebedingungen zu, insbesondere gemäß vorgegebener Vorschriften, so wird dem Fahrer des zweiten Kraftfahrzeugs beispielsweise eine Warnung angezeigt oder es wird ein Warnton abgespielt, der auf das Motorrad 1 hinweist. Der Hinweis kann dabei beispielsweise mehrstufig erfolgen, je nach Kritikalität und Wahrscheinlichkeit einer möglichen Kollision. Dazu kann beispielsweise anhand der zeitlichen Überschneidung der Trajektorien, anhand eines Fahrverhaltens des Fahrers des zweiten Kraftfahrzeugs 2 oder basierend auf der Wahrscheinlichkeit der Verdeckung des Motorrads 1 aus Sicht des Fahrers des zweiten Kraftfahrzeugs 2 unterschieden werden.

Zusätzlich oder alternativ zu dem Hinweis ist es auch möglich, die Bremssysteme des zweiten Kraftfahrzeugs 2 vorzuspannen oder den Bremsdruck zu erhöhen, oder eine automatische Bremsaktion einzuleiten, oder, falls das zweite Kraftfahrzeug 2 steht, es am Losfahren zu hindern.

Entsprechend können auch für eine Warnung für den Fahrer des Motorrads 1 eine oder mehrere Auslösebedingungen vorgesehen sein. Die Auslösebedingungen für den Fahrer des Motorrads 1 können beispielsweise beinhalten, dass sich das Motorrad 1 der Kreuzung 5 nähert und/oder dass sich das dritte Kraftfahrzeug 3 vor dem Motorrad 1 befindet. Dies kann insbesondere mittels des ersten Umfeldsensorsystems 12 erfasst werden oder anhand von C2X-Nachrichten, welche das dritte Kraftfahrzeug 3 aussendet. Die Auslösebedingungen für den Fahrer des Motorrads 1 können es auch beinhalten, dass das dritte Kraftfahrzeug 3 im Begriff ist abzubiegen. Dies kann beispielsweise durch einen Blinkerstatus des dritten Kraftfahrzeugs 3 aus einer CAM-Nachricht des dritten Kraftfahrzeugs 3 und/oder basierend auf den ersten Sensordaten bestimmt werden. Das bevorstehende Abbiegen des dritten Kraftfahrzeugs 3 kann alternativ oder zusätzlich auch durch eine Reduktion der Geschwindigkeit des dritten Kraftfahrzeugs 3 erfasst werden.

Die Auslösebedingungen für die Warnung für den Fahrer des Motorrads 1 können es auch beinhalten, dass sich das zweite Kraftfahrzeug 2 der Kreuzung 5 nähert oder bereits an der Haltelinie steht. Dies kann beispielsweise durch von dem zweiten Kraftfahrzeug 2 ausgesendete C2X, insbesondere CAM-Nachrichten, erkannt werden oder durch Erkennung der Vorfahrtsituation auf Basis von internen Kartendaten, Kartennachrichten einer Infrastrukturvorrichtung der Kreuzung 5 oder beispielsweise auf Basis einer Verkehrszeichenerkennung basierend auf den ersten Sensordaten.

Trifft eine oder treffen mehrere Auslösebedingungen, die auch in beliebiger Kombination vorgesehen sein können, zu, so wird der Motorradfahrer mit geeigneten Mitteln gewarnt. Auch hier kann der Hinweis mehrstufig erfolgen, je nach Kritikalität und Wahrscheinlichkeit eines möglichen Zusammenstoßes. Hier kann auf Basis der zeitlichen Überschneidung der potentiellen Trajektorien auf Basis des Fahrverhaltens des Fahrers des Kraftfahrzeugs 2 und/oder des Motorradfahrers, auf Basis der Wahrscheinlichkeit der Verdeckung des Kraftfahrzeugs 2 aus Sicht des Fahrers des Motorrads 1 und so weiter unterschieden werden. Der Hinweis an den Fahrer des Motorrads 1 kann hier auch visuell, akustisch oder haptisch erfolgen.

Alternativ oder zusätzlich kann auch automatisch eine Notbremsung oder ein Bremseingriff eingeleitet werden, um die Schwere einer Kollision zu verringern.

Wie beschrieben, werden durch das verbesserte Konzept ein Verfahren und ein System angegeben, durch das die Wahrscheinlichkeit oder Schwere einer Kollision zwischen wie Kraftfahrzeugen, wobei eines der beiden Kraftfahrzeuge durch ein weiteres Kraftfahrzeug verdeckt ist, reduziert werden kann. In verschiedenen Ausführungsformen wird dadurch insbesondere eine Pkw-Schutzfunktion ermöglicht, die spezifisch den Schutz und die Vermeidung von Unfällen mit verdeckten Motorrädern im Bereich von Kreuzungen oder Einmündungen ermöglichen.

### Bezugszeichenliste

- 1: Motorrad
- 2: Kraftfahrzeug
- 3: Kraftfahrzeug
- 4a, 4b: Straße
- 5: Kreuzung
- 6: Kommunikationsschnittstelle
- 7: Kommunikationsschnittstelle
- 8: Recheneinheit
- 9: Recheneinheit
- 10: Fahrerüberwachungssystem
- 11: System zur Reduzierung eines Kollisionsrisikos
- 12: Umfeldsensorsystem
- 13: Umfeldsensorsystem

## Patentansprüche

1. Verfahren zur Reduzierung eines Kollisionsrisikos zwischen einem ersten Kraftfahrzeug (1), bei dem es sich insbesondere um ein Kraftrad handelt, und einem zweiten Kraftfahrzeug (2), wobei
- das erste Kraftfahrzeug (1) und das zweite Kraftfahrzeug (2) auf jeweils unterschiedlichen Straßen (4a, 4b) in Richtung einer gemeinsamen Kreuzung (5) oder Einmündung der Straßen (4a, 4b) fahren; und
- wenigstens eine erste Fahrzeug-zu-Umwelt-Nachricht von dem ersten Kraftfahrzeug (1) ausgesendet wird und von dem zweiten Kraftfahrzeug (2) empfangen wird;
- mittels einer zweiten Recheneinheit (9) des zweiten Kraftfahrzeugs (2) abhängig von der wenigstens einen ersten Fahrzeug-zu-Umwelt-Nachricht festgestellt wird, ob eine Risikosituation gegeben ist, in der das erste Kraftfahrzeug (1) für einen Fahrer des zweiten Kraftfahrzeugs (2) und/oder für ein Umfeldsensorsystem (13) des zweiten Kraftfahrzeugs (2) durch ein dem ersten Kraftfahrzeug (1) vorausfahrendes drittes Kraftfahrzeug (3) verdeckt ist, eine Kritikalitätsanalyse durchgeführt wird, wenn festgestellt wurde, dass die Risikosituation gegeben ist, und abhängig von einem Ergebnis der Kritikalitätsanalyse eine risikoreduzierende Maßnahme eingeleitet wird;
- mittels eines Umfeldsensorsystems (12) des ersten Kraftfahrzeugs (1) erste Sensordaten erzeugt werden, die eine in Fahrtrichtung vor dem ersten Kraftfahrzeug (1) liegende Umgebung repräsentieren und die wenigstens eine erste Fahrzeug-zu-Umwelt-Nachricht abhängig von den ersten Sensordaten erzeugt und ausgesendet wird, wobei die wenigstens eine erste Fahrzeug-zu-Umwelt-Nachricht eine erste Fahrzeug-zu-Umwelt-Sensornachricht betreffend die ersten Sensordaten enthält;
- mittels einer ersten Recheneinheit (8) des ersten Kraftfahrzeugs (1) basierend auf den ersten Sensordaten überprüft wird, ob sich ein weiteres Kraftfahrzeug innerhalb eines vorgegeben Bereichs vor und/oder neben dem ersten Kraftfahrzeug (1) befindet und die erste Fahrzeug-zu-Umwelt-Sensornachricht nur dann ausgesendet wird, wenn anhand der Überprüfung festgestellt wird, dass sich das weitere Kraftfahrzeug innerhalb des vorgegebenen Bereichs befindet, und/oder mittels der zweiten Recheneinheit (9) basierend auf der wenigstens einen ersten Fahrzeug-zu-Umwelt-Nachricht und den ersten Sensordaten eine Wahrscheinlichkeit dafür bestimmt wird, dass das erste Kraftfahrzeug (1) durch das dritte Kraftfahrzeug (3) verdeckt ist und die Kritikalitätsanalyse basierend auf der Wahrscheinlichkeit für die Verdeckung durchgeführt wird.

2. Verfahren nach Anspruch 1,
**dadurch gekennzeichnet, dass**
- mittels der ersten Recheneinheit (8) weiter überprüft wird, ob sich die Kreuzung (5) oder Einmündung innerhalb einer vorgegebenen Entfernung von dem ersten Kraftfahrzeug (1) befindet; und
- die erste Fahrzeug-zu-Umwelt-Sensornachricht nur dann ausgesendet wird, wenn anhand der weiteren Überprüfung festgestellt wird, dass sich die Kreuzung (5) oder Einmündung innerhalb der vorgegebenen Entfernung befindet.

3. Verfahren nach einem der Ansprüche 1 oder 2,
**dadurch gekennzeichnet, dass**
- wenigstens eine zweite Fahrzeug-zu-Umwelt-Nachricht von dem zweiten Kraftfahrzeug (2) ausgesendet wird und von dem ersten Kraftfahrzeug (1) empfangen wird;
- mittels der ersten Recheneinheit (8) eine erste weitere Kritikalitätsanalyse durchgeführt wird, wenn anhand der weiteren Überprüfung festgestellt wird, dass sich das weitere Kraftfahrzeug innerhalb des vorgegebenen Bereichs befindet; und
- mittels der ersten Recheneinheit (8) abhängig von einem Ergebnis der weiteren Kritikalitätsanalyse eine erste weitere risikoreduzierende Maßnahme eingeleitet wird.

4. Verfahren nach einem der vorhergehenden Ansprüche,
**dadurch gekennzeichnet, dass**
die wenigstens eine erste Fahrzeug-zu-Umwelt-Nachricht eine erste Fahrzeug-zu-Umwelt-Statusnachricht betreffend einen Zustand des ersten Kraftfahrzeugs (1) enthält und die die erste Fahrzeug-zu-Umwelt-Statusnachricht insbesondere zyklisch ausgesendet wird.

5. Verfahren nach einem der vorhergehenden Ansprüche,
**dadurch gekennzeichnet, dass**
- die risikoreduzierende Maßnahme das Ausgeben einer visuellen, akustischen und/oder haptischen Warnung für den Fahrer des zweiten Kraftfahrzeugs (2) beinhaltet;
und/oder
- die risikoreduzierende Maßnahme einen automatischen Eingriff in eine Steuerung des zweiten Kraftfahrzeugs (2) beinhaltet; und/oder
- die risikoreduzierende Maßnahme das Ausgeben einer visuellen und/oder akustischen Warnung in eine Umgebung des zweiten Kraftfahrzeugs (2) beinhaltet.

6. Verfahren nach einem der vorhergehenden Ansprüche,
**dadurch gekennzeichnet, dass**
- mittels eines Fahrerüberwachungssystems (10) des zweiten Kraftfahrzeugs Fahrerüberwachungsdaten betreffend den Fahrer des zweiten Kraftfahrzeugs (2) erzeugt werden;
- mittels der zweiten Recheneinheit (9)
- die Kritikalitätsanalyse abhängig von den Fahrerüberwachungsdaten durchgeführt wird; und/oder
- eine zweite weitere Kritikalitätsanalyse abhängig von den Fahrerüberwachungsdaten durchgeführt wird und abhängig von einem Ergebnis der zweiten weiteren Kritikalitätsanalyse eine zweite weitere risikoreduzierende Maßnahme eingeleitet wird.

7. System zur Reduzierung eines Kollisionsrisikos zwischen einem ersten Kraftfahrzeug (1), bei dem es sich insbesondere um ein Kraftrad handelt, und einem zweiten Kraftfahrzeug (1), wobei das erste Kraftfahrzeug (1) und das zweite Kraftfahrzeug (2) auf jeweils unterschiedlichen Straßen (4a, 4b) in Richtung einer gemeinsamen Kreuzung (5) oder Einmündung der Straßen (4a, 4b) fahren, wobei
- das System (11) eine erste Kommunikationsschnittstelle (6) für das erste Kraftfahrzeug (1), dazu eingerichtet, wenigstens eine erste Fahrzeug-zu-Umwelt-Nachricht auszusenden, und eine zweite Kommunikationsschnittstelle (7) für das zweite Kraftfahrzeug (2), dazu eingerichtet, die wenigstens eine erste Fahrzeug-zu-Umwelt-Nachricht zu empfangen, aufweist;
- das System (11) eine zweite Recheneinheit (9) für das zweite Kraftfahrzeug (2) aufweist, die dazu eingerichtet ist, abhängig von der wenigstens einen ersten Fahrzeug-zu-Umwelt-Nachricht festzustellen, ob eine Risikosituation gegeben ist, in der das erste Kraftfahrzeug (1) für einen Fahrer des zweiten Kraftfahrzeugs (2) und/oder für ein Umfeldsensorsystem (13) des zweiten Kraftfahrzeugs (2) durch ein dem ersten Kraftfahrzeug (1) vorausfahrendes drittes Kraftfahrzeug (3) verdeckt ist, eine Kritikalitätsanalyse durchzuführen, wenn festgestellt wurde, dass die Risikosituation gegeben ist, und abhängig von einem Ergebnis der Kritikalitätsanalyse eine risikoreduzierende Maßnahme einzuleiten;
- das System (11) ein Umfeldsensorsystem (12) für das erste Kraftfahrzeugs (1) aufweist, das dazu eingerichtet ist, erste Sensordaten zu erzeugen, die eine in Fahrtrichtung vor dem ersten Kraftfahrzeug (1) liegende Umgebung repräsentieren und die erste Kommunikationsschnittstelle (6) dazu eingerichtet ist, die wenigstens eine erste Fahrzeug-zu-Umwelt-Nachricht abhängig von den ersten Sensordaten zu erzeugen und auszusenden, wobei die wenigstens eine erste Fahrzeug-zu-Umwelt-Nachricht eine erste Fahrzeug-zu-Umwelt-Sensornachricht betreffend die ersten Sensordaten enthält; und
- das System (11) eine erste Recheneinheit (8) für das erste Kraftfahrzeug (1) aufweist, die dazu eingerichtet ist, basierend auf den ersten Sensordaten zu überprüfen, ob sich ein weiteres Kraftfahrzeug innerhalb eines vorgegeben Bereichs vor und/oder neben dem ersten Kraftfahrzeug (1) befindet und die erste Kommunikationsschnittstelle (6) dazu eingerichtet ist, die erste Fahrzeug-zu-Umwelt-Sensornachricht nur dann auszusenden, wenn anhand der Überprüfung festgestellt wird, dass sich das weitere Kraftfahrzeug innerhalb des vorgegebenen Bereichs befindet, und/oder die zweite Recheneinheit (9) dazu eingerichtet ist, basierend auf der wenigstens einen ersten Fahrzeug-zu-Umwelt-Nachricht und den ersten Sensordaten eine Wahrscheinlichkeit dafür zu bestimmen, dass das erste Kraftfahrzeug (1) durch das dritte Kraftfahrzeug (3) verdeckt ist und die Kritikalitätsanalyse basierend auf der Wahrscheinlichkeit für die Verdeckung durchzuführen.

## Claims

1. A method for reducing a risk of collision between a first motor vehicle (1), which is in particular a motorcycle, and a second motor vehicle (2), wherein
- the first motor vehicle (1) and the second motor vehicle (2) travel on respectively different roads (4a, 4b) towards a common crossroads (5) or junction of the roads (4a, 4b); and
- at least one first vehicle-to-environment message is transmitted by the first motor vehicle (1) and received by the second motor vehicle (2);
- by a second computing unit (9) of the second motor vehicle (2) depending on the at least one first vehicle-to-environment message, it is determined if a risk situation exists, in which the first motor vehicle (1) is obscured for a driver of the second motor vehicle (2) and/or for an environmental sensor system (13) of the second motor vehicle (2) by a third motor vehicle (3) preceding the first motor vehicle (1), a criticality analysis is performed if it has been determined that the risk situation exists, and depending on a result of the criticality analysis, a risk-reducing measure is initiated;
- by an environmental sensor system (12) of the first motor vehicle (1) first sensor data are generated, which represent an environment lying in front of the first motor vehicle (1) in direction of travel and the at least one first vehicle-to-environment message is generated and transmitted depending on the first sensor data, wherein the at least one first vehicle-to-environment message contains a first vehicle-to-environment sensor message concerning the first sensor data;
- by a first computing unit (8) of the first motor vehicle (1) based on the first sensor data it is examined whether a further motor vehicle is within a preset range in front of and/or next to the first motor vehicle (1) and the first vehicle-to-environment sensor message is transmitted only, if based on the examination it is found that the further motor vehicle is within the preset range, and/or by the second computing unit (9) based on the at least one first vehicle-to-environment message and the first sensor data a probability for the fact that the first motor vehicle (1) is obscured by the third motor vehicle (3) and the criticality analysis is performed based on the probability of obscuration.

2. The method according to claim 1,
**characterized in that**
- it is further examined by the first computing unit (8) whether the crossroads (5) or junction is within a preset distance from the first motor vehicle (1); and
- the first vehicle-to-environment sensor message is transmitted only if it is determined based on the further examination that the crossroads (5) or junction is within the preset distance.

3. The method according to any one of claims 1 or 2,
**characterized in that**
- at least one second vehicle-to-environment message is transmitted by the second motor vehicle (2) and received by the first motor vehicle (1);
- a first further criticality analysis is performed by the first computing unit (8) if it is determined based on the further examination that the further motor vehicle is within the preset range; and
- by the first computing unit (8), a first further risk-reducing measure is initiated depending on a result of the further criticality analysis.

4. The method according to any one of the preceding claims,
**characterized in that**
the at least one first vehicle-to-environment message contains a first vehicle-to-environment status message concerning a state of the first motor vehicle (1) and the first vehicle-to-environment status message is transmitted in particular cyclically.

5. The method according to any one of the preceding claims,
**characterized in that**
- the risk-reducing measure includes outputting a visual, acoustic, and/or haptic warning for the driver of the second motor vehicle (2); and/or
- the risk-reducing measure includes an automatic intervention in a control of the second motor vehicle (2); and/or
- the risk-reducing measure includes outputting a visual and/or acoustic warning into an environment of the second motor vehicle (2).

6. The method according to any one of the preceding claims,
**characterized in that**
- by a driver monitoring system (10) of the second motor vehicle, driver monitoring data relating to the driver of the second motor vehicle (2) is generated;
- by the second computing unit (9)
- the criticality analysis is performed depending on the driver monitoring data; and/or
- a second further criticality analysis is performed depending on the driver monitoring data and a second further risk-reducing measure is initiated depending on a result of the second further criticality analysis.

7. A system for reducing a risk of collision between a first motor vehicle (1), which is in particular a motorcycle, and a second motor vehicle (1), wherein the first motor vehicle (1) and the second motor vehicle (2) travel on respectively different roads (4a, 4b) towards a common crossroads (5) or junction of the roads (4a, 4b), wherein
- the system (11) comprises a first communication interface (6) for the first motor vehicle (1) configured to transmit at least one first vehicle-to-environment message and a second communication interface (7) for the second motor vehicle (2) configured to receive the at least one first vehicle-to-environment message;
- the system (11) comprises a second computing unit (9) for the second motor vehicle (2) configured to determine if a risk situation exists, in which the first motor vehicle (1) is obscured for a driver of the second motor vehicle (2) and/or for an environmental sensor system (13) of the second motor vehicle (2) by a third motor vehicle (3) preceding the first motor vehicle (1), depending on the at least one first vehicle-to-environment message, perform a criticality analysis if it has been determined that the risk situation exists, and initiate a risk-reducing measure depending on a result of the criticality analysis;
- the system (11) comprises an environmental sensor system (12) for the first motor vehicle (1) which is configured to generate first sensor data representing an environment lying in front of the first motor vehicle (1) in direction of travel and the first communication interface (6) is configured to generate and transmit the at least one first vehicle-to-environment message depending on the first sensor data, wherein the at least one first vehicle-to-environment message contains a first vehicle-to-environment sensor message concerning the first sensor data; and
- the system (11) comprises a first computing unit (8) for the first motor vehicle (1), which is configured to examine based on the first sensor data whether a further motor vehicle is within a preset range in front of and/or next to the first motor vehicle (1) and the first communication interface (6) is configured to transmit the first vehicle-to-environment sensor message only if based on the examination it is determined that the further motor vehicle is within the preset range, and/or the second computing unit (9) is configured to determine based on the at least one first vehicle-to-environment message and the first sensor data a probability for the fact that the first motor vehicle (1) is obscured by the third motor vehicle (3) and to perform the criticality analysis based on the probability of obscuration.

## Revendications

1. Procédé de réduction d'un risque de collision entre un premier véhicule à moteur (1), celui-ci étant en particulier une motocyclette, et un deuxième véhicule à moteur (2), dans lequel
- le premier véhicule à moteur (1) et le deuxième véhicule à moteur (2) circulent sur des routes (4a, 4b) respectivement différentes en direction d'une intersection (5) ou jonction commune des routes (4a, 4b) ; et
- au moins un premier message véhicule-vers-environnement est envoyé par le premier véhicule à moteur (1) et est reçu par le deuxième véhicule à moteur (2) ;
- à l'aide d'une deuxième unité de calcul (9) du deuxième véhicule à moteur (2), en fonction de l'au moins un premier message véhicule-vers-environnement, on détermine si une situation de risque existe, dans laquelle le premier véhicule à moteur (1) est masqué pour un conducteur du deuxième véhicule à moteur (2) et/ou pour un système de capteurs d'environnement (13) du deuxième véhicule à moteur (2) par un troisième véhicule à moteur (3) précédant le premier véhicule à moteur (1), une analyse de criticité est effectuée lorsqu'il a été déterminé que la situation de risque existe et, en fonction d'un résultat de l'analyse de criticité, une mesure de réduction de risque est lancée ;
- à l'aide d'un système de capteurs d'environnement (12) du premier véhicule à moteur (1), des premières données de capteur sont produites, lesquelles représentent un environnement situé devant le premier véhicule à moteur (1) dans la direction de conduite et l'au moins un premier message véhicule-vers-environnement est produit et est envoyé en fonction des premières données de capteur, dans lequel l'au moins un premier message véhicule-vers-environnement comporte un premier message de capteur véhicule-vers-environnement concernant les premières données de capteur ;
- à l'aide d'une première unité de calcul (8) du premier véhicule à moteur (1), sur la base des premières données de capteur, on vérifie si un autre véhicule à moteur se trouve à l'intérieur d'une région prédéfinie devant le premier véhicule à moteur (1) et/ou près de celui-ci et le premier message de capteur véhicule-vers-environnement n'est envoyé que lorsqu'à l'aide de la vérification, il a été déterminé que l'autre véhicule à moteur se trouve à l'intérieur de la région prédéfinie, et/ou à l'aide de la deuxième unité de calcul (9), sur la base de l'au moins un premier message véhicule-vers-environnement et des premières données de capteur, une probabilité que le premier véhicule à moteur (1) soit masqué par le troisième véhicule à moteur (3) est déterminée et l'analyse de criticité est effectuée sur la base de la probabilité du masquage.

2. Procédé selon la revendication 1,
**caractérisé en ce**
- **qu'**à l'aide de la première unité de calcul (8), on vérifie en outre si l'intersection (5) ou la jonction se trouve à moins d'une distance prédéfinie du premier véhicule à moteur (1) ; et
- **que** le premier message de capteur véhicule-vers-environnement n'est envoyé que lorsqu'à l'aide de l'autre vérification, il a été déterminé que l'intersection (5) ou la jonction se trouve à moins de la distance prédéfinie.

3. Procédé selon l'une des revendications 1 ou 2, **caractérisé en ce**
- **qu'**au moins un deuxième message véhicule-vers-environnement est envoyé par le deuxième véhicule à moteur (2) et est reçu par le premier véhicule à moteur (1) ;
- **qu'**à l'aide de la première unité de calcul (8), une première autre analyse de criticité est effectuée lorsqu'à l'aide de l'autre vérification, il a été déterminé que l'autre véhicule à moteur se trouve à l'intérieur de la région prédéfinie ; et
- **qu'**à l'aide de la première unité de calcul (8), en fonction d'un résultat de l'autre analyse de criticité, une première autre mesure de réduction de risque est lancée.

4. Procédé selon l'une des revendications précédentes, **caractérisé en ce que**
l'au moins un premier message véhicule-vers-environnement comporte un premier message d'état véhicule-vers-environnement concernant un état du premier véhicule à moteur (1) et le premier message d'état véhicule-vers-environnement est envoyé en particulier cycliquement.

5. Procédé selon l'une des revendications précédentes, **caractérisé en ce que**
- la mesure de réduction de risque comporte l'émission d'un avertissement visuel, acoustique et/ou haptique pour le conducteur du deuxième véhicule à moteur (2) ; et/ou
- la mesure de réduction de risque comporte une intervention automatique dans une commande du deuxième véhicule à moteur (2) ; et/ou
- la mesure de réduction de risque comporte l'émission d'un avertissement visuel et/ou acoustique dans un environnement du deuxième véhicule à moteur (2).

6. Procédé selon l'une des revendications précédentes, **caractérisé en ce**
- **qu'**à l'aide d'un système de surveillance de conducteur (10) du deuxième véhicule à moteur, des données de surveillance de conducteur concernant le conducteur du deuxième véhicule à moteur (2) sont produites ;
- **qu'**à l'aide de la deuxième unité de calcul (9)
- l'analyse de criticité est effectuée en fonction des données de surveillance de conducteur ; et/ou
- une deuxième autre analyse de criticité est effectuée en fonction des données de surveillance de conducteur et, en fonction d'un résultat de la deuxième autre analyse de criticité, une deuxième autre mesure de réduction de risque est lancée.

7. Système de réduction d'un risque de collision entre un premier véhicule à moteur (1), celui-ci étant en particulier une motocyclette, et un deuxième véhicule à moteur (1), le premier véhicule à moteur (1) et le deuxième véhicule à moteur (2) circulant sur des routes (4a, 4b) respectivement différentes en direction d'une intersection (5) ou jonction commune des routes (4a, 4b),
- le système (11) présentant une première interface de communication (6) pour le premier véhicule à moteur (1), conçue pour envoyer au moins un premier message véhicule-vers-environnement, et une deuxième interface de communication (7) pour le deuxième véhicule à moteur (2), conçue pour recevoir l'au moins un premier message véhicule-vers-environnement ;
- le système (11) présentant une deuxième unité de calcul (9) pour le deuxième véhicule à moteur (2), qui est conçue pour déterminer, en fonction de l'au moins un premier message véhicule-vers-environnement, si une situation de risque existe, dans laquelle le premier véhicule à moteur (1) est masqué pour un conducteur du deuxième véhicule à moteur (2) et/ou pour un système de capteurs d'environnement (13) du deuxième véhicule à moteur (2) par un troisième véhicule à moteur (3) précédant le premier véhicule à moteur (1), pour effectuer une analyse de criticité lorsqu'il a été déterminé que la situation de risque existe et, en fonction d'un résultat de l'analyse de criticité, pour lancer une mesure de réduction de risque ;
- le système (11) présentant un système de capteurs d'environnement (12) pour le premier véhicule à moteur (1), qui est conçu pour produire des premières données de capteur qui représentent un environnement situé devant le premier véhicule à moteur (1) dans la direction de conduite et la première interface de communication (6) étant conçue pour produire et envoyer l'au moins un premier message véhicule-vers-environnement en fonction des premières données de capteur, l'au moins un premier message véhicule-vers-environnement comportant un premier message de capteur véhicule-vers-environnement concernant les premières données de capteur ; et
- le système (11) présentant une première unité de calcul (8) pour le premier véhicule à moteur (1), qui est conçue, sur la base des premières données de capteur, pour vérifier si un autre véhicule à moteur se trouve à l'intérieur d'une région prédéfinie devant le premier véhicule à moteur (1) et/ou près de celui-ci et la première interface de communication (6) étant conçue pour n'envoyer le premier le premier message de capteur véhicule-vers-environnement que lorsqu'à l'aide de la vérification, il a été déterminé que l'autre véhicule à moteur se trouve à l'intérieur de la région prédéfinie, et/ou la deuxième unité de calcul (9) étant conçue, sur la base de l'au moins un premier message véhicule-vers-environnement et des premières données de capteur, pour déterminer une probabilité que le premier véhicule à moteur (1) soit masqué par le troisième véhicule à moteur (3) et pour effectuer l'analyse de criticité sur la base de la probabilité du masquage.
